# EUROPEAN PATENT APPLICATION

(11) **EP 3 889 850 A1**
(43) Date of publication of application: **06.10.2021**
(21) Application number: 21164597.3
(22) Date of filing: 24.03.2021
(51) Int. Cl.: G06N 20/00

(54) **LEARNING DATA PROCESSING DEVICE, LEARNING DATA PROCESSING METHOD AND NON-TRANSITORY COMPUTER-READABLE MEDIUM**

(30) Priority: 31.03.2020 JP 2020063701
(71) Applicant: YOKOGAWA ELECTRIC CORPORATION, Musashino-shi Tokyo 180-8750 (JP)
(72) Inventor: JINGUU, Yashiyuki, Musashino-shi, Tokyo 180-8750 (JP)
(74) Representative: Grünecker Patent- und Rechtsanwälte PartG mbB

(57) **Abstract**

The learning data processing device 10 includes the data processing unit 12 configured to generate learning data used in the learning device 30 that generates a learning model on the basis of time-series data including at least one kind of measured value. The data processing unit 12 executes at least one of a first removal process in which a statistical value of measured values included in one or multiple predetermined periods of the time-series data and at least one of an outlier determination upper limit value or an outlier determination lower limit value based on the statistical value are calculated, and, of measured values included in one or multiple predetermined periods, measured values that are at least one of those greater than or equal to the outlier determination upper limit value or those less than or equal to the outlier determination lower limit value are removed from the time-series data, or a second removal process in which, of measured values included in the time-series data, measured values satisfying a predetermined condition are removed from the time-series data.

## Description

### TECHNICAL FIELD

The present disclosure relates to a learning data processing device, a learning data processing method and a non-transitory computer-readable medium.

### BACKGROUND

A learning data processing device that learns teacher data and generates a determination model is known (see, for example, Patent Literature (PTL) 1).

### CITATION LIST

### Patent Literature

PLT 1: JP2018-077757(A)

### SUMMARY

### (Technical Problem)

In order to improve the accuracy of a determination model, it is required to improve the quality of learning data in light of the use for leaning a determination model.

It is therefore an object of the present disclosure to provide a learning data processing device, a learning data processing method and a non-transitory computer-readable medium that can improve the quality of the learning data,

### (Solution to Problem)

A learning data processing device according to some embodiments includes a data processing unit configured to generate learning data used in a learning device that generates a learning model on the basis of time-series data including at least one kind of measured value. The data processing unit executes at least one of a first removal process in which a statistical value of measured values included in one or multiple predetermined periods of the time-series data and at least one of an outlier determination upper limit value or an outlier determination lower limit value based on the statistical value are calculated, and, of the measured values included in the one or multiple predetermined periods, measured values that are at least one of those greater than or equal to the outlier determination upper limit value or those less than or equal to the outer determination lower limit value are removed from the time-series data, or a second removal process in which, of measured values included in the time-series data, measured values satisfying a predetermined condition are removed from the time-series data. In this manner, the learning data processing device can specify abnormal measured values or measured values acquired in a period during which an object to be measured is not in operation and remove them from the learning data. As a result, the quality of the learning data is improved.

In the learning data processing device according to an embodiment, the data processing unit may execute both the first removal process and the second removal process. In this manner, compared to the case where one of the first removal process and the second removal process is performed, it is easier for the learning data processing device to specify abnormal measured values and measured values acquired in a period during which an object to be measured is not in operation. As a result, the quality of the learning data is improved.

In the learning data processing device according to an embodiment, the first removal process may include a process in which the statistical value of measured values and at least one of an outlier determination upper limit value or an outlier determination lower limit value based on the statistical value are calculated and, of measured values included in each of the multiple predetermined periods, measured values that are at least one of those greater than or equal to the outlier determination upper limit value or those less than or equal to the outlier determination lower limit value are removed from the time-series data. In this manner, compared to a case where removal data is specified for all measured values included in the time-series data, the accuracy of detecting abnormal measured values is improved. As a result, the quality of the learning data is improved.

In the learning data processing device according to an embodiment, the multiple predetermined periods include a first predetermined period and a second predetermined period, which is a part of the first predetermined period, and the first removal process may include a third removal process in which a first statistical value of measured values included in the first predetermined period and at least one of a first outlier determination upper limit value or a first outlier determination lower limit value based on the first statistical value are calculated, and, of measured values included in the first predetermined period, measured values that are at least one of those greater than or equal to the first outlier determination upper limit value or those less than or equal to the first outlier determination lower limit value are removed, and a fourth removal process in which, of measured values after removal acquired by executing the third removal process, a second statistical value of measured value after removal included in the second predetermined period and at least one of a second outlier determination upper limit value or a second outlier determination lower limit value based on the second statistical value are calculated and, of the measured values after removal included in the second predetermined period, measured values that are at least one of those greater than or equal to the second outlier determination upper limit value or those less than or equal to the second outlier determination lower limit value are removed. In this manner, measured values that are desired to be specified as the removal data are easily specified as the removal data. That is, the accuracy of detecting abnormal measured values is improved. As a result, the quality of the learning data is improved.

In the learning data processing device according to an embodiment, the data processing unit may set a length of the second predetermined period on the basis of autocorrelation of the time-series data. In this manner, a means for detecting abnormal measured values is configured according to the time-series data. As a result, the quality of the learning data is improved.

In a learning data processing method according to some embodiments, the learning data used in a learning device that generates a learning model is generated on the basis of the time-series data including at least one kind of measured value. The learning data processing method includes at least one of a first step in which a statistical value of measured values included in one or multiple predetermined periods of the time-series data and at least one of an outlier determination upper limit value or an outlier determination lower limit value based on the statistical value are calculated, and, of measured values included in the one or multiple predetermined periods, measured values that are at least one of those greater than or equal to the outlier determination upper limit value or those less than or equal to the outlier determination lower limit value are removed from the time-series data, or a second step in which, of measured values included in the time-series data, measured values satisfying a predetermined condition are removed from the time-series data. In this manner, the learning data processing device can specify abnormal measured values or measured values acquired in a period during which an object to be measured is not in operation and remove them from the learning data. As a result, the quality of the learning data is improved.

A non-transitory computer-readable medium according to some embodiments stores a learning data processing program that causes a processor to generate leaning data used in a leaning device that generates a learning model on the basis of time-series data including at least one kind of measured value. The learning data processing program causes the processor to execute at least one of a first step in which a statistical value of measured values included in one or multiple predetermined periods of the time-series data and at least one of an outlier determination upper limit value or an outlier determination lower limit value based on the statistical value are calculated, and, of measured values included in the one or multiple predetermined periods, measured values that are at least one of those greater than or equal to the outlier determination upper limit value or those less than or equal to the outlier determination lower limit value are removed from the time-series data, or a second step in which, of measured values included in the time-series data, measured values satisfying a predetermined condition are removed from the time-series data. In this manner, the learning data processing device can specify abnormal measured values, or measured values acquired in a period during which an object to be measured is not in operation and remove them from the learning data. As a result, the quality of the learning data is improved.

### (Advantageous Effect)

According to the present disclosure, a learning data processing device, a learning data processing method and a non-transitory computer-readable medium that can improve the quality of the learning data are provided.

### BRIEF DESCRIPTION OF THE DRAWINGS

In the accompanying drawings:
FIG. 1 is a block diagram illustrating a learning data processing system according to a comparative example;
FIG. 2 is a graph illustrating an example of the time-series data;
FIG. 3 is a block diagram illustrating a configuration example of a learning data processing system according to an embodiment;
FIG. 4 is a graph illustrating an example of the time-series data including abnormal values;
FIG. 5 is a graph illustrating appearance probability of measured values included in the time-series data in FIG. 4 approximated by normal distribution;
FIG. 6 is a graph illustrating an example of the time-series data and the movement data;
FIG. 7 is a graph illustrating an example of autocorrelation of the time-series data; and
FIG. 8 is a flowchart illustrating an example of a procedure of a learning data processing method.

### DETAILED DESCRIPTION

### (Comparative example)

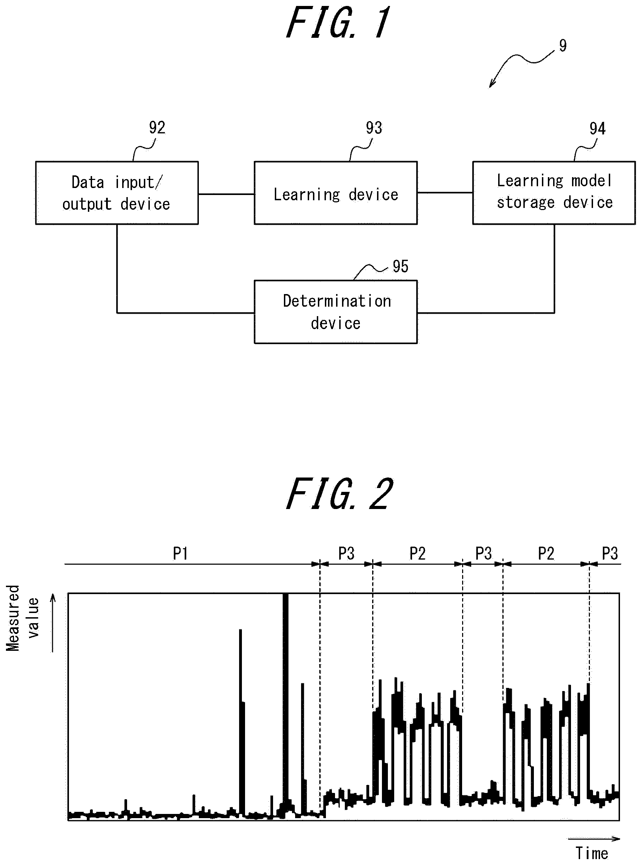

As illustrated in FIG. 1, a learning system 9 according to a comparative example includes a data input/output device 92 configured to acquire measured values from an object to be measured, a learning device 93, a learning model storage device 94 and a determination device 95. The learning system 9 determines maintenance timing of an object to be measured by applying measured values to a model. The learning system 9 generates, as a model that applies measured values, a learning model based on the learning data.

The data input/output device 92 acquires the time-series data in which the measured values are associated with the time data. The data input/output device 92 may include a sensor that acquires measured values. The data input/output device 92 may include an interface connected to the sensor. The sensor measures the physical quantity of the object to be measured and outputs it as a measured value. The time data corresponds to the time at which the sensor measures the physical quantity of the object to be measured.

The learning device 93 acquires the time-series data, which will be the learning data, from the data input/output device 92 and generates a learning model on the basis of the learning data.

The learning model storage device 94 stores the learning model generated by the learning device 93.

The determination device 95 acquires the time-series data to be evaluated from the data input/output device 92 and evaluates the data to be evaluated on the basis of the learning model.

FIG. 2 illustrates an example of the time-series data, which will be the learning data. In FIG. 2, the horizontal axis represents time and the vertical axis represents measured value. The time-series data includes period PI, period P2 and period P3. Period P1 corresponds to the period during which the data input/output device 92 is connected to or installed in an object to be measured or a sensor. Period P2 corresponds to the period during which the object to be measured is in operation, and period P3 corresponds to the period in which the object to be measured stops.

The learning device 93 generates a learning model on the basis of the time-series data that includes all data of periods PI, P2 and P3.

Here, the determination device 95 determines the state of the object to be measured on the basis of the data acquired when the object to be measured is in operation. As a model used for determination, a learning model generated only on the basis of the data in period P2 during which the object to be measured is in operation is more suitable than a learning model generated on the basis of all the data regardless of the state of the object to be measured. In other words, the learning data that extracts only the data of period P2 during which the object to be measured is in operation is more suitable for generating a learning model than the learning data that includes all the data.

It is required for the learning device 93 to generate a learning model on the basis of the learning data suitable for generating a learning model. That is, in view of generating a learning model, it is required to improve the quality of the learning data.

Further, if the learning data is extracted manually, it is difficult to realize because a great deal of labor is needed. Thus it is required to easily improve the quality of the learning data.

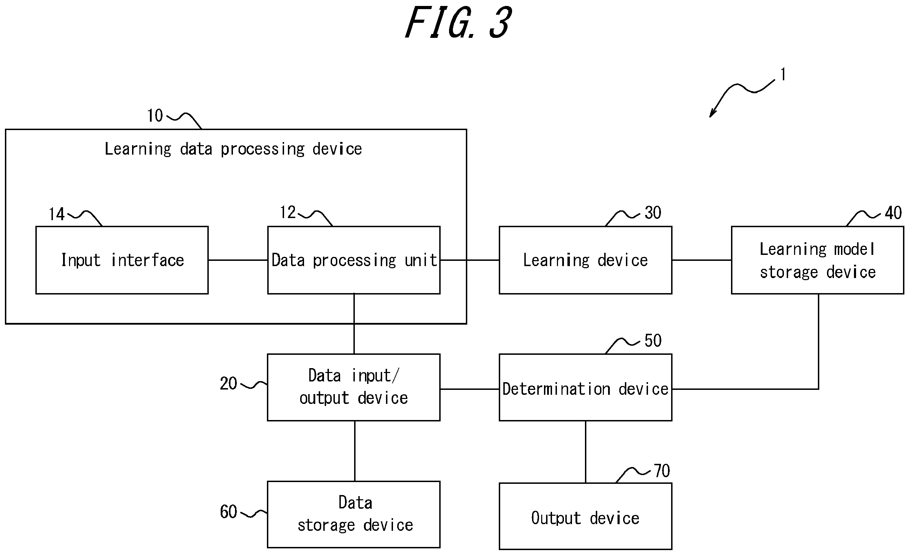

Therefore, the present disclosure describes the learning data processing device 10 (see FIG. 3) capable of improving the quality of the learning data.

### (Embodiment)

As illustrated in FIG. 3, the learning system 1 according to an embodiment of the present disclosure includes a learning data processing device 10, a data input/output device 20, a learning device 30, a learning model storage device 40, a determination device 50, a data storage device 60 and an output device 70.

### <Overview of functions of learning system 1>

The learning system 1 evaluates the state of the object to be measured by applying a model to the measured values acquired by measuring the physical quantity of the object to be measured to evaluate an action to be taken to the object to be measured. The object to be measured may include, for example, equipment such as plant piping or pumps, or electrical equipment. Further, the learning system 1 is not limited to plants, but is also applied to sites that have equipment that needs to measure physical quantities with sensors. That is, the object to be measured may include site equipment.

The physical quantity of the object to be measured may include, for example, an acceleration or a velocity representing the vibration of a pipe. a pump or the like. The physical quantity of the object to be measured may include, for example, surface temperatures of a pipe, a pump, or the like. The physical quantity of the object to be measured may include, for example, a current flowing through a circuit included in electrical equipment or a voltage applied to a circuit. The physical quantity of the object to be measured is not limited to the above described examples, and may include a variety of physical quantities such as a pressure, a flow rate, a sound pressure, pH, etc.

The state of the object to be measured may be represented, for example, by the flow rate of liquid or gas flowing through a pipe when the plant is in operation. The state of the object to be measured may be represented, for example, by the magnitude of vibration in the pipe when the plant is in operation. The state of the object to be measured may include a state that can be recognized by a human sense such as sight, hearing, touch, or smell by a plant manager or a maintenance worker, or may include a state that cannot be recognized by a human sense. Actions to be taken on the object to be measured may include, for example, shutting down and inspecting the plant, or may include cleaning or replacement of components.

The learning system 1 generates a learning model based on the learning data including past measured values of the object to be measured. The learning data may include measured values of one physical quantity of the object to be measured or measured values of each of multiple physical quantities. That is, the learning data may include measured values of at least one kind of physical quantity of the object to be measured. The learning data may include measured values measured at one or multiple positions of the object to be measured. The learning data may include measured values measured at one or multiple times. The learning data may include the information that associates the state of the object to be measured recognized by the sense of the manager or the maintenance worker of the object to be measured with the measured values. The learning data may include the information that associates the action that can be determined by recognizing the state of the object to be measured by the sense of the manager or the maintenance worker of the object to be measured with the measured values.

The learning system 1 evaluates the state of the object to be measured by applying a learning model to the measured value of the object to be measured. The learning system 1 outputs an evaluation result of the state of the object to be measured or determines an action to be taken to the object to be measured on the basis of the evaluation result.

### <Description of each component of learning system 1 >

Specific example of each component of the learning system 1 will be described below.

The data input/output device 20 acquires the time-series data in which the measured value is associated with the time data and outputs it to the learning data processing device 10. The data input/output device 20 may be connected to the data storage device 60 to acquire the time-series data stored in the data storage device 60. The data input/output device 20 may include a sensor that acquires measured values. The data input/output device 20 may include an interface connected to a sensor. The data input/output device 20 may associate the measured value acquired from the sensor with the time data from which the measured value is acquired to generate time-series data. The time-series data may include measured values acquired in a predetermined cycle. The predetermined cycle may be one hour, one day, or any other kinds of values. The time-series data may include measured values acquired at indefinite intervals.

The sensor measures the physical quantity of the object to be measured and outputs it as a measured value. The time data corresponds to the time at which the sensor measures the physical quantity of the object to be measured. The sensor may include a vibration sensor that detects vibration of the piping, etc. as velocity or acceleration. The sensor may include a temperature sensor that detects temperatures on the surface of the piping, etc. The sensor may include a pressure sensor that detects a pressure from a pressure gauge installed on the piping, etc. The sensor may include a pressure sensor that detects a pressure from a pressure gauge installed on the piping. The sensor is not limited to the above described examples, and may include a sensor that detects a variety of physical quantities.

The data input/output device 20 may acquire the operating information of the object to be measured and output it to the learning data processing device 10. The operating information of the object to be measured may include the information indicating that whether the object to be measured is in operation or stops.

The data input/output device 20 outputs measured values of the object to be measured to the determination device 50 and acquires an evaluation result of the measured values of the object to be measured from the determination device 50.

The learning data processing device 10 includes a data processing unit 12. The data processing unit 12 acquires the time-series data from the data input/output device 20, and processes the time-series data to generate the learning data used in the learning device 30. The data processing unit 12 may output the generated learning data to the learning device 30. The data processing unit 12 may store the generated learning data in the data storage device 60 or other storage devices. The learning device 30 may acquire the learning data from the data storage device 60 or other storage devices. The data processing unit 12 may be configured by including a processor such as a Central Processing Unit (CPU). The data processing unit 12 may realize a variety of functions of the learning data processing device 10 by executing a predetermined program.

The data processing unit 12 may include a storage. The storage may store various kinds of information used for operating the data processing unit 12 or program for realizing the function of the data processing unit 12. The storage may function as a work memory of the data processing unit 12. The storage may be composed of a semiconductor memory, for example. The storage may be configured separately from the data processing unit 12.

The learning data processing device 10 further includes an input interface 14, but not essential. The input interface 14 may include an input device that accepts inputs from a user such as a manager or a maintenance worker of the object to be measured. The input interface 14 may accept, by an input device, an input of the information that defines a method of processing the time-series data by the data processing unit 12, for example. The input device may include, for example, a keyboard or physical keys, or may include a touch panel or a touch sensor or a pointing device such as a mouse. Examples of the input device are not limited to above, and may include other types of devices.

The learning device 30 acquires the learning data from the learning data processing device 10, generates a learning model on the basis of the learning data and outputs it to the learning model storage device 40. The learning device 30 may be configured by including a processing device such as a CPU.

The learning model storage device 40 stores a learning model generated by the learning device 30. The learning model storage device 40 may be configured by including an electromagnetic storage medium such as a magnetic disc, and the like. The learning model storage device 40 may be configured by including a semiconductor memory and the like.

The determination device 50 acquires a learning model from the learning model storage device 40. The determination device 50 acquires the time-series data including measured values of the object to be measured, which will be the data to be evaluated, from the data input/output device 20. The determination device 50 evaluates by applying the learning model to the measured values of the object to be measured, and determines the state of the object to be measured on the basis of the evaluation result. In other words, the determination device 50 generates the information on the evaluation result of the object to be measured by applying a learning model to the measured values of the object to be measured. The determination device 50 outputs the information on the evaluation result of the object to be measured to the data input/output device 20. The information on the evaluation result of the object to be measured may be output from the data input/output device 20 to the data storage device 60 and stored in the data storage device 60. The determination device 50 may be configured by including a processor such as a CPU.

The state of the object to be measured can be represented by a parameter of the model. The model may have a plurality of parameters. The determination device 50 calculates the parameter of the model by applying the measured values acquired from the object to be measured to the model. The determination device 50 determines the state of the object to be measured on the basis of the parameter of the model. The determination device 50 may represent the state of the object to be measured as a score. The score may be, for example, a numerical value that represents the degree of deterioration of the object to be measured. In this case, when the score is greater than or equal to the predetermined value, it may be determined that maintenance of the object to be measured is necessary.

The data storage device 60 may include a device that stores measurement data, such as a recorder and the like. The data storage device 60 may be configured by including an electromagnetic storage medium such as a magnetic disc, and the like. The data storage device 60 may be configured by including a semiconductor memory and the like.

The output device 70 outputs the determination result of the state of the object to be measured by the determination device 50 and notifies it to a user such as a manager or a maintenance worker of the object to be measured. The output device 70 may be configured by including a display device. The display device may include a Liquid Crystal Display (LCD), for example. The display device may include an organic Electro-Luminescence (EL) display or an inorganic EL display. The display device may include a Plasma Display Panel (PDP). The display device is not limited to the above described displays, and may include other types of displays. The display device may include a light-emitting device such as a Light Emission Diode (LED). The output device 70 may be configured by including an audio output device such as a speaker.

### <Learning data processing>

In the learning system 1, as the accuracy of a learning model generated by the learning device 30 increases, the determination device 50 can determine the state of the object to be measured with high accuracy. The accuracy of the learning model can correspond to the probability that the state of the object to be measured determined on the basis of the measured value acquired from the object to be measured matches the actual state. Further, the accuracy of the learning model can correspond to how close the score representing the state of the object to be measured calculated on the basis of the measured value acquired from the object to be measured to the score corresponding to the actual state.

The learning device 30 generates a learning model that estimates the state of the object to be measured when an unknown measured value is acquired, on the basis of the learning data that associates the state of the object to be measured with the measured value in that state, for example. The data that has little or no correlation with the state of the object to be measured is noise data that reduces the accuracy of the learning model. As the noise data included in the learning data used for generating a learning model decreases, the accuracy of the learning model generated by the learning device 30 can be increased.

Here, it is assumed that the data input/output device 20 acquires, as a measured value of a sensor, the time-series data illustrated in FIG. 2. Period P1 of the time-series data corresponds to a period during which a sensor is connected to or installed on the object to be measured. Period P2 corresponds to a period during which an object to be measured is in operation. Period P3 corresponds to a period during which the object to be measured stops. It is highly likely that the time-series data in period P2 has a high correlation with respect to the state of the object to be measured, and is the data useful for determining the state of the object to be measured. On the other hand, the time-series data of period P1 or P3 is the data different from the data acquired when the object to be measured is in operation, and has almost no or no correlation with respect to the state of the object to be measured. Thus, the learning model generated only by the time-series data of period P2 as the learning data can be more accurate than the learning model generated by the time-series data of all periods of PI, P2 and P3 as the learning data. That is, the time-series data of period P2 is more suitable as the learning data used for generating a learning model than the time-series data of all periods.

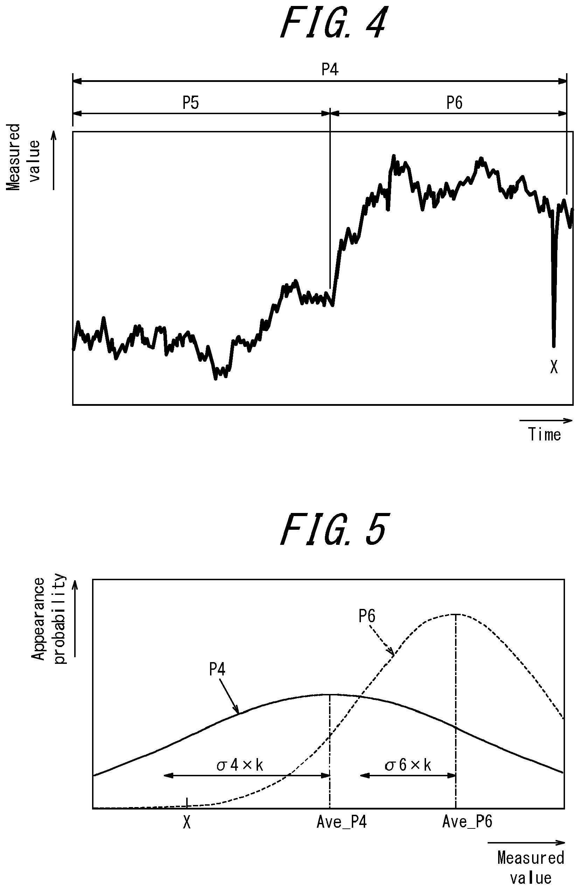

Further, the time-series data can include abnormal measured values due to abnormal measurement or abnormal communication by a sensor. Here, it is assumed that the data input/output device 20 acquires the time-series data illustrated in FIG. 4 as sensor measured values. In the graph illustrated in FIG. 4, the horizontal axis represents time and the vertical axis represents measured value. In the graph in FIG. 4, the data represented by X has an abnormally low value as compared to the data at the time before and after X, and can be said to be an abnormal measured value. It is highly likely that the abnormal measured value is the data that has almost no or no correlation with respect to the state of the object to be measured. Thus, a learning model generated on the basis of the time-series data excluding abnormal measured values can be more accurate than a learning model generated on the basis of the time-series data including abnormal values. That is, the time-series data excluding abnormal measured values is more suitable as learning data used for generating a learning model than the time-series data including abnormal measured values.

In the learning system 1, the data processing unit 12 of the learning data processing device 10 acquires the time-series data from the data input/output device 20, processes the acquired time-series data as the learning data and outputs it to the learning device 30. The data processing unit 12 removes measured values satisfying a predetermined condition from measured values included in the time-series data so that the learning data suitable for generating a learning model can be output to the learning device 30. The measured values satisfying a predetermined condition are also referred to as removal data. The removal data includes measured values acquired when the object to be measured is not in operation, for example. The removal data includes measured values that are determined as abnormal values. That is, in view of generating a learning model, the removal data corresponds to the measured values that deteriorate the quality of the learning data. The process in which the data processing unit 12 specifies the removal data and removes it from the time-series data is illustrated below.

### «Outlier removal process»

The data processing unit 12 calculates the statistical value of all measured values included in the time-series data (e. g., measured values of all periods including PI, P2 and P3 in FIG. 2). In this embodiment, the data processing unit 12 calculates the average value and standard deviation of the measured values as a statistical value. The data processing unit 12 may calculate, for example, the median value, the maximum value or the minimum value, or various other statistics such as the first quartile or the third quartile as a statistical value.

The data processing unit 12 removes abnormal measured values on the basis of the statistical value. The process in which the data processing unit 12 removes abnormal measured values is also referred to as an outlier removal process. The data processing unit 12 may perform the outlier removal process according to the following procedure. The data processing unit 12 calculates a range of not abnormal measured value, that is, a range of normal measured value, on the basis of the statistical value. The data processing unit 12 determines the measured values that are out of the calculated range as an abnormal measured value and specifies it as removal data. The range used by the data processing unit 12 for determination is also referred to as an outlier determination range. The outlier determination range is specified by at least one of the upper limit or the lower limit. The upper limit and the lower limit of the outlier determination range is also referred to as an outlier determination upper limit value and an outlier determination lower limit value, respectively. The data processing unit 12 may determine the measured value that is less than or equal to the outlier determination lower limit value as an abnormal measured value. The data processing unit 12 may determine a measured value that is less than the outlier determination lower limit value as an abnormal measured value. The data processing unit 12 may determine the measured value that is greater than or equal to the outlier determination upper limit value as an abnormal measured value. The data processing unit 12 may determine a measured value exceeding the outlier determination upper limit value as an abnormal measured value.

The data processing unit 12 may execute the outlier removal process according to the following procedure. The data processing unit 12 calculates the absolute value of the difference between each measured value and the average value. The data processing unit 12 specifies, as removal data, the measured value whose calculated absolute value is greater than or equal to the value obtained by multiplying the standard deviation by a predetermined coefficient. In this manner, the data processing unit 12 can remove abnormal measured values. The predetermined coefficient is also referred to as an outlier determination coefficient or a first coefficient. The outlier determination coefficient may be set to 2 or 3, for example. The outlier determination coefficient is not limited to these examples, and may be set to any positive real number. The value obtained by multiplying the standard deviation by the outlier determination coefficient is also referred to as the outlier determination threshold.

The data processing unit 12 can remove abnormal measured values generated by measurement errors or input of disturbance from the learning data by executing the outlier removal process. As a result, the quality of the learning data is improved. The outlier removal process is also referred to as a first removal process.

### << Removal process of data when not in operation>>

When the measured value of the predetermined physical quantity included in the time-series data satisfies a predetermined condition, the data processing unit 12 specifies the measured value as the removal data. Specifically, the data processing unit 12 executes the removal process of data when not in operation in which the data acquired when it is highly likely that the object to be measured is not in operation is specified as the removal data and is removed.

When the measured value of acceleration is less than the predetermined threshold, for example, the data processing unit 12 may determine that it is highly likely that the object to be measured is not in operation when the measured value is acquired, and specify the measured value as the removal data. Further, for example, when the measured value of the temperature is not included in a predetermined range, which is a temperature range during operation, the data processing unit 12 may determine that it is highly likely that the object to be measured is not in operation when the measured value is acquired, and specify the measured value as the removal data. The data processing unit 12 may also specify the measured value of the other physical quantity acquired at the same time as the measured value specified as the removal data as removal data. In this manner, the data acquired when it is highly likely that the object to be measured is not in operation is removed. As a result, the accuracy of the learning model can be improved.

The data processing unit 12 may set the predetermined threshold or the predetermined range on the basis of the distribution of the measured values included in the time-series data. For example, when the frequency distribution of the measured values included in the time-series data has two or more peaks, the data processing unit 12 may set the measured values between any two peaks as the predetermined threshold. For example, when the frequency distribution of the measured values included in the time-series data has two or more peaks, the data processing unit 12 may set the predetermined range so as to remove a predetermined peak.

For example, when the measured value of acceleration at certain time is less than the predetermined threshold, the data processing unit 12 may set the threshold of the other physical quantity so that the measured value of the other physical quantity at that time is removed.

The data processing unit 12 may acquire the information that specifies whether the object to be measured is in operation or not in operation from the data input/output device 20. The data processing unit 12 can determine whether the measured value included in the time-series data is acquired when the object to be measured is in operation or not in operation on the basis of the information that specifies whether the object to be measured is in operation or not in operation. The data processing unit 12 may specify the measured value that can be determined as acquired when the object to be measured is not in operation as the removal data.

Even if the information specifying that the object to be measured is in operation or not in operation cannot be acquired, the data processing unit 12 can specify the measured value acquired when the object to be measured is not in operation as the removal data by determining that if the measured value satisfies the predetermined condition. As a result, the quality of the learning data is improved. The removal process of the data when not in operation is also referred to as a second removal process.

### «Instantaneous value removal process»

For example, in the time-series data illustrated in FIG. 4, it is desirable that the measured value represented by X is specified as the removal data. The measured value represented by X has a large difference with respect to the other measured values included in period P6. On the other hand, the measured value represented by X has only a small difference with respect to some measured values (measured values included in period P5) of the measured values included in the whole period (period P4). Then, when the above described outlier removal process is executed for the measured values included in the whole period (period P4), the measured value represented by X is difficult to be specified as the removal data.

As described below, the data processing unit 12 may calculate the statistical value of the measured values included in multiple predetermined periods of the time-series data and the outlier determination range based on the statistical value, and specify the measured values out of the outlier determination range as the removal data. That is, the data processing unit 12 may determine the measured values included in multiple predetermined periods of the time-series data in the same manner as the outlier removal process to specify the removal data. The process in which the data processing unit 12 determines the measured values included in multiple predetermined periods of the time-series data in the same manner as the outlier removal process to specify the removal data is also referred to as an instantaneous value removal process.

Specifically, the data processing unit 12 executes the instantaneous value removal process according to the following procedure. The data processing unit 12 may set all periods or some periods of the time-series data as the predetermined period. The predetermined period corresponds to period P4, or P5 or P6 in FIG. 4. The data processing unit 12 determines the measured values included in the predetermined period in the same manner as the outlier removal process. The data processing unit 12 changes to a different predetermined period and determines the measured values included in the predetermined period in the same manner as the outlier removal process. That is, the data processing unit 12 measures the measured values included in each of the predetermined periods different from each other in the same manner as the outlier removal process.

The data processing unit 12 may set, as multiple predetermined periods different from each other, a first predetermined period corresponding to the whole period (period P4) of the time-series data and a second predetermined period corresponding to some periods (period P5 or P6) of the time-series data.

The data processing unit 12 may calculate a first statistical value as a statistical value of the measured values included in the first predetermined period and a first outlier determination range as an outlier determination range based on the first statistical value to specify the measured values out of the first outlier determination range as the removal data. The upper limit and the lower limit of the first outlier determination range are also referred to as a first outlier determination upper limit value and a first outlier determination lower limit value, respectively. The outlier removal process executed by the data processing unit 12 for the measured values included in the first predetermined period is also referred to as a third removal process.

The data processing unit 12 may calculate a second statistical value as the statistical value of the measured values included in the second predetermined period and a second outlier determination range as the outlier determination range based on the second statistical value to specify the measured values out of the second outlier determination range as the removal data. The upper limit and the lower limit of the second outlier determination range are also referred to as a second outlier determination upper limit value and a second outlier determination lower limit value, respectively. The outlier removal process executed by the data processing unit 12 for the measured values included in the second predetermined period is also referred to as a fourth removal process. The data processing unit 12 may execute the fourth removal process while sliding the second predetermined period in the whole period of the time-series data.

In addition, the data processing unit 12 may execute the instantaneous value removal process according to the following procedure. When the above described outlier removal process is executed to the measured values included in the time-series data in FIG. 4, the average value and the standard deviation of the measured values are calculated. As illustrated in FIG. 5, on the basis of the calculated average value and the standard deviation, distribution of the appearance probability of the measured values are approximated by the normal distribution. The solid line graph represents the distribution of the appearance probability of the measured values included in the whole period (period P4). The dashed line graph represents the distribution of the appearance probability of the measured values included in period P6. In the graph in FIG. 5, the horizontal axis represents the measured value and the vertical axis represents the appearance probability of each measured value.

The measured values included in the whole period (period P4) are more widely distributed than the measured values included in period P6. Therefore, the standard deviation of the measured values included in the period P4 (σ4) is larger than the standard deviation of the measured values included in period P6 (σ6). Further, the average value of the measured values included in period P4 (Ave P4) is smaller than the average value of the measured values included in period P6 (Ave_P6) under the influence of the measured values included in period P5.

Here, an absolute value of the difference between the measured value represented by X and the average value of the measured values included in period P4 (Ave_P4), (|X-Ave_P4|), is smaller than the outlier determination threshold (σ4 × k) obtained by multiplying the standard deviation (σ4) by the coefficient (k). Then, when the outlier removal process is executed to the measured values included in the whole period (period P4), the measured value represented by X does not satisfy the conditions as the removal data, and is not specified as the removal data.

On the other hand, an absolute value of the difference between the measured value represented by X and the average value of the measured values included in the period P6 (Ave_P6), (|X-Ave_P6|), is larger than the outlier determination threshold (σ6 × k) acquired by multiplying the standard deviation (σ6) by the coefficient (k). Then, when the outlier removal process is executed to the measured values included in period P6, the measured value represented by X satisfies the conditions as the removal data, and is specified as the removal data.

The average value and the standard deviation of the measured values included in some periods of the time-series data are also referred to as a partial average value and a partial standard deviation, respectively. The coefficient (k) used for the instantaneous value removal process is also referred to as an instantaneous value determination coefficient or a second coefficient. The instantaneous value determination coefficient may be set to the same value as or different value from the outlier determination coefficient. The instantaneous value determination coefficient may be set to 2 or 3. The instantaneous value determination coefficient is not limited to the above described examples, and may be set to any positive real number. The value obtained by multiplying the standard deviation by the instantaneous value determination coefficient is also referred to as an instantaneous value determination threshold.

In this manner, a certain measured value is specified or not specified as the removal data by changing a period including the measured values for calculating the statistical value such as an average value and a standard deviation in the outlier removal process. In other words, the measured values specified as the removal data when the outlier removal process is executed for the measured values included in a certain period may not be specified as the removal data by executing the outlier removal process for the measured values included in a different period.

The data processing unit 12 executes the instantaneous value removal process, and thus allows the measured value desired to be specified as the removal data, like the measured value represented by X in FIG. 4, to be easily specified as the removal data. That is, the accuracy of detecting an abnormal measured value is improved. As a result, the quality of the learning data is improved.

### <<<Example of setting a length of period to be determined>>>

Some periods set in the instantaneous value removal process are also referred to as a period to be determined. The data processing unit 12 may set a length of period to be determined by the method described below, for example, so that the removal data can be appropriately specified in the instantaneous value removal process.

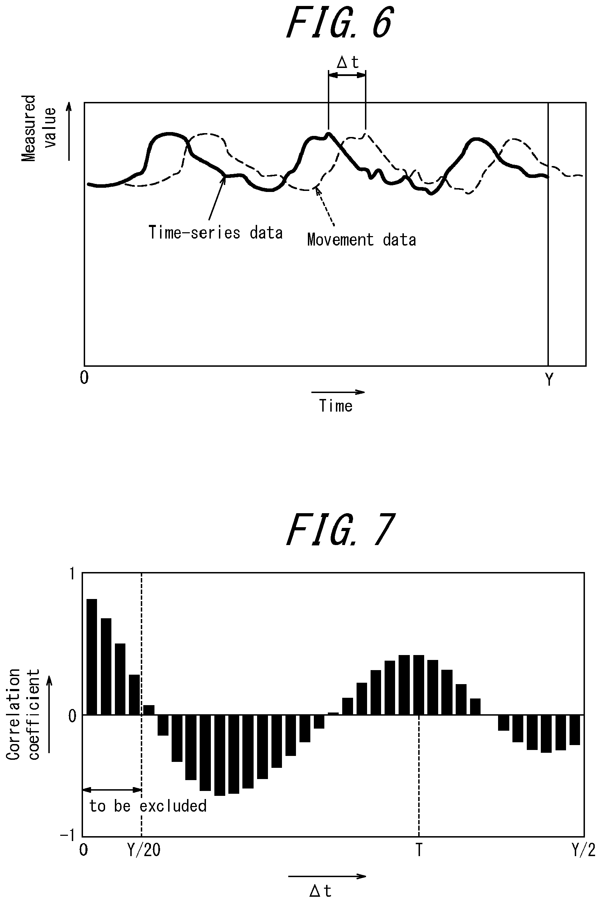

In FIG. 6, an example of the time-series data is indicated by the solid line. In FIG. 6, the horizontal axis represents time. The time-series data includes the measured values from the time 0 to time Y. The vertical axis represents measured value.

The data processing unit 12 calculates the autocorrelation of the time-series data on the basis of the time-series data illustrated in FIG. 6. The autocorrelation of the time-series data is represented as correlation of the data obtained by moving the time-series data itself by a predetermined time.

Specifically, the data processing unit 12 generates the data obtained by moving the time-series data by the time represented by Δt. The data obtained by moving the time-series data by the time represented by Δt is referred to as the movement data, and is indicated by the dashed line in FIG. 6. The data processing unit 12 calculates the product of the instantaneous value of the time-series data and the instantaneous value of the movement data at each time, and adds the product of the instantaneous value at each time over the entire time to calculate the correlation coefficient between the time-series data and the movement data. The correlation coefficient between the time-series data and the movement data is the maximum when the time-series data and the movement data completely match. The movement data is obtained by moving the time-series data by Δt. Thus the correlation coefficient between the time-series data and the movement data represents the autocorrelation of the time-series data.

The data processing unit 12 changes the values of Δt from 0 to Y/2 and calculates the correlation coefficient between the time-series data and the movement data for each value of Δt. The graph in FIG. 7 illustrates a relationship between the values of Δt and a correlation coefficient between the time-series data and the movement data, that is, the autocorrelation of the time-series data. In FIG. 7, the horizontal axis represents Δt and the vertical axis represents the correlation coefficient.

As illustrated in FIG. 7, the correlation coefficient has a local maximum. The value of Δt when the correlation coefficient is a local maximum can correspond to the natural number multiple of the cycle of the time-series data. That is, the data processing unit 12 can calculate the cycle of the time-series data by specifying the value of Δt when the correlation coefficient is a local maximum.

Here, when Δt = 0, the time-series data and the movement data completely match, thus the correlation coefficient is maximized. Therefore, when Δt is close to zero, the correlation coefficient tends to be large. When detecting the local maximum of the correlation coefficient, the data processing unit 12 excludes the correlation coefficient when Δt is less than a predetermined value. The data processing unit 12 detects the local maximum for the correlation coefficient when Δt is greater than or equal to a predetermined value, and specifies Δt when the correlation coefficient is a local maximum. The data processing unit 12 may set a predetermined value for defining a range for detecting a local maximum of the correlation coefficient to Y/20, for example. In this case, as illustrated in FIG. 7, the correlation coefficient when Δt is less than Y/20 is excluded. The data processing unit 12 may set, as a predetermined value, Δt when the minimum value of the correlation coefficient appears for the first time when Δt is increased from 0.

The correlation coefficient can have multiple local maximums. It is assumed that T represents the minimum value of the values of Δt corresponding to each local maximum. T can correspond to the cycle of the time-series data. The data processing unit 12 may set a length of the period to be determined used for the instantaneous value removal process, on the basis of the value of T. For example, the data processing unit 12 may set the length of the period to be determined to the value of T itself. The data processing unit 12 may set the length of the period to be determined to T/2, for example. In this manner, the instantaneous value removal process can be executed within a half wave range.

The data processing unit 12 may set the length of the period to be determined to T/4, for example. In this manner, if the time-series data is approximated to a sine wave, the instantaneous value removal process can be executed in a range in which the measured value is greater than or equal to the effective value, that is, in a range in which the rate of change of the measured value is decreased. As a result, the removal data can be specified with higher accuracy. The data processing unit 12 is not limited to these examples, and the length of the period to be determined may be set to various values based on T.

On the other hand, the smaller the length of the period to be determined is set, the larger the load of the instantaneous value removal process. Therefore, the data processing unit 12 may reduce the load of the instantaneous value removal process by setting the length of the period to be determined to greater than or equal to the predetermined value. The predetermined value may be set appropriately.

The data processing unit 12 may estimate the cycle of the time-series data not only by calculating the autocorrelation of the time-series data but also processing the time-series data with other means such as Fourier transform. The data processing unit 12 may set the length of the period to be determined on the basis of the cycle of the time-series data estimated with other means such as Fourier transform.

The data processing unit 12 can configure the means for detecting abnormal measured values according to the time-series data by appropriately setting the length of the period to be determined on the basis of the time-series data.

### «Example of specifying removal data»

The time-series data includes measured values of tag A, tag B and tag C as illustrated in Table 1 below, for example. The tag is an identifier of the sensor that acquires measured values. Tag A, tag B, and tag C correspond to sensors that measure the acceleration, the velocity, and the temperature of an object to be measured, respectively. In Table 1, it is assumed that the time-series data includes the measured values of each tag at five times from TM1 to TM5. In Table 1, the measured values in the cells with shaded hatching correspond to the removal data.

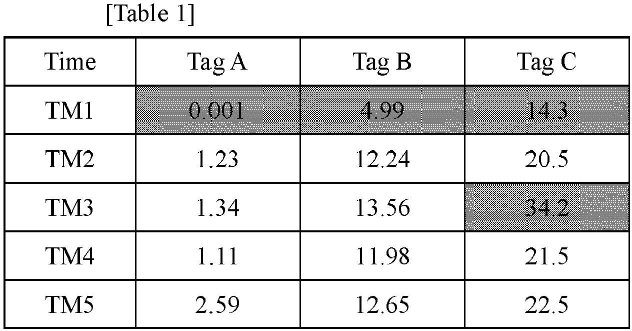

The data processing unit 12 specifies the measured value of tag A at time TM1 as the removal data on the basis of the fact that the measured value of tag A at time TM1 is less than or equal to the predetermined threshold. Here, assuming that the predetermined threshold used for determination of the measured values of tag A is set to an appropriate value such as 0.01, etc. The data processing unit 12 may determine that the object to be measured is not in operation at time TM1 in light of the fact that tag A corresponds to acceleration. The data processing unit 12 may also specify the measured values of tag B and tag C at time TM1 at which the object to be measured is determined to be not in operation as the removal data. That is, the data processing unit 12 specifies the measured value of each tag at time TM1 as the removal data by the removal process of data when not in operation.

Regardless of whether the object to be measured is in operation or not in operation at time TM1, the data processing unit 12 may specify the measured value of tag B at time TM1 as the removal data on the basis of the fact that the measured value of tag B at time TM1 is less than or equal to the predetermined threshold. The predetermined threshold used for determination of the measured values of tag B may be set appropriately. The data processing unit 12 may specify the measured value of tag C at time TM1 as the removal data on the basis of the fact that the measured value of tag C at time TM1 is out of the predetermined range. The predetermined range used for determination of the measured values of tag C may be set appropriately.

The data processing unit 12 calculates the average value and the standard deviation of the measured values of tag C at each time. When the absolute value of the difference between the measured value and the average value is greater than the value obtained by multiplying the standard deviation by a predetermined coefficient, the data processing unit 12 specifies the measured value as the removal data. In the data illustrated in Table 1, the data processing unit 12 specifies the measured value of tag C at time TM3 as the removal data. That is, the data processing unit 12 specifies the measured value of tag C at time TM3 as the removal data by the outlier removal processing.

The data processing unit 12 may execute the removal process to the time-series data illustrated in Table 1 to generate the learning data illustrated in Table 2. In the learning data illustrated in Table 2, regardless of whether or not the measured values of tag A and tag B satisfy the removal data condition, the measured values of all tags at time TM3 are removed. This is because, when the measured values of tag C are specified as the removal data, the reliability of the measured values of other tags (tag A and tag B) at time TM3 may be reduced.

**[Table 2]**

| Time | Tag A | Tag B | Tag C |
|---|---|---|---|
| TM2 | 1.23 | 12.24 | 20.5 |
| TM4 | 1.11 | 11.98 | 21.5 |
| TM5 | 2.59 | 12.65 | 22.5 |

### <<Summary>>

As described above, in the learning system 1 according to the present embodiment, the learning data processing device 10 can specify abnormal measured values or measured values obtained when the object to be measured is not in operation and remove them from the learning data. As a result, in light of generating a learning model, the quality of the learning data is improved. Further, the quality of the learning data can be easily improved without a user such as a manager or a maintenance worker of the object to be measured specifying abnormal measured values or specifying measured values of the period during which the object to be measured is not in operation.

The learning data processing device 10 may execute not only the outlier removal process, the removal process of data when not in operation or the instantaneous value removal process but also a various kinds of removal processes. The learning data processing device 10 may execute at least one removal process of the outlier removal process, the removal process of data when not in operation or the instantaneous value removal process. In this manner, the quality of the learning data is improved.

The learning data processing device 10 may execute both the outlier removal process and the removal process of data when not in operation, which allows the learning data processing device 10 to easily specify abnormal measured values or measured values obtained in the period during which the object to be measured is not in operation, compared to the case where only one of the removal processes is executed. As a result, the quality of the learning data is further improved.

The learning data processing device 10 may execute the outlier removal process, the removal process of data when not in operation and the instantaneous value removal process in any order. For example, the removal process of data when not in operation may be executed before the outlier removal process. In this manner, the learning data processing device 10 can execute the processing according to the contents of the time-series data. Further, the degree of freedom of operation of the learning data processing device 10 is increased.

The learning data processing device 10 may execute the other removal process after actually removing the removal data by one removal process. The learning data processing device 10 may specify the removal data by a removal process but not actually remove it, execute the other removal process, and then actually remove the removal data after specifying the removal data in all removal processes. The learning data processing device 10 can choose the contents of the removal process as appropriate, which allows for execution of the process suitable for the contents of the time-series data.

### <Flowchart example of learning data processing method >

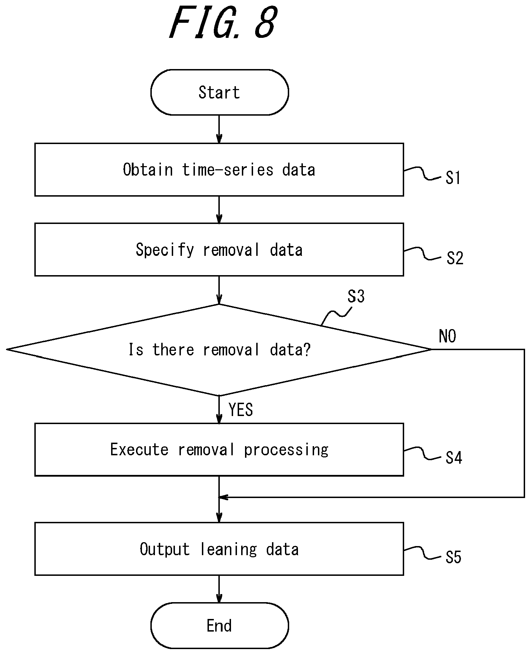

The learning data processing device 10 may execute the procedure illustrated in the flowchart in FIG. 8 as the learning data processing method of processing the time-series data to generate the learning data. The procedure illustrated in the flowchart in FIG. 8 may be realized as the learning data processing program that causes the processor constituting the data processing unit 12 of the learning data processing device 10 to execute. The learning data processing program may be stored in the non-transitory computer-readable medium such as an electromagnetic storage medium.

The data processing unit 12 acquires the time-series data from the data input/output device 20 (step S1).

The data processing unit 12 specifies the removal data from the time-series data (step S2). Specifically, the data processing unit 12 executes the outlier removal process to specify the removal data. The data processing unit 12 may execute the removal process of data when not in operation to specify the removal data. The data processing unit 12 may execute the instantaneous value removal process to specify the removal data. The data processing unit 12 may execute at least one of the outlier removal process, the removal process of data when not in operation, or the instantaneous value removal process. The data processing unit 12 may execute in order of the outlier removal process, the removal process of data when not in operation and the instantaneous value removal process. The data processing unit 12 may execute the removal process of data when not in operation before the outlier removal process.

The data processing unit 12 determines if there is the removal data (step S3). When there is no removal data (NO in step S3), the data processing unit 12 proceeds to step S5. When there is the removal data (YES in step S3), the data processing unit 12 executes the removal process (step S4). As the removal process, the data processing unit 12 removes the measured values specified as the removal data from the measured values included in the time-series data.

The data processing unit 12 outputs the learning data to the learning device 30 (step S5). When the data processing unit 12 determines that there is no removal data in step S3 and does not execute step S4, it outputs the acquired time-series data, as it is, as the learning data. When executing step S4, the data processing unit 12 outputs the time-series data to which the removal process is executed as the learning data. The data processing unit 12 finishes the procedure of the flowchart in FIG. 8 after step S4.

As described above, in light of generation of a learning model, the quality of the learning data is improved by executing the learning data processing method according to the present embodiment. Further, the quality of the leaning data can be improved easily.

### (Another embodiment)

The learning system 1 according to an embodiment may realize at least a part of the components by hardware resources on a cloud computer. For example, the learning device 30, the learning model storage device 40, the determination device 50 or the like may be realized by hardware resources such as a server or a storage device on a cloud computer.

Further, the learning data processing device 10 may be realized by hardware resources such as a server on a cloud computer. In this case, the learning system 1 may send the learning data processing program to a server and the like on a cloud computer to cause the server to execute it. The learning system 1 may appropriately change the process of generating the learning data by changing the contents of the learning data processing program. The learning system 1 may change the contents of the learning data processing program on the basis of inputs from a user such as a manager or a maintenance worker of the object to be measured. The learning system 1 may change the contents of the learning data processing program on the basis of inputs from external devices. Further, at least a part of the learning data processing device 10, the learning device 30, the learning model storage device 40 or the determination device 50 may be realized by an edge computer, a recorder or the like.

The data processing unit 12 of the learning data processing device 10 may process the time-series data on the basis of the definition file that defines the contents of the removal process to generate the learning data. The data processing unit 12 may set the contents of the definition file on the basis of an input from a user such as a manager or a maintenance worker of the object to be measured or an input from external devices. The definition file may include the information that sets a predetermined coefficient such as an outlier determination coefficient, for example, or the information that sets a predetermined threshold such as an outlier determination threshold. The definition file may include the information that defines predetermined conditions used in the removal process of data when not in operation. The definition file may include the information that specifies the type or the execution order of the removal process executed by the data processing unit 12. The learning system 1 causes the learning data processing device 10 to generate the learning data with reference to the definition file, which allows for easy generation of the learning model according to the configuration of the object to be measured. As a result, the accuracy of determining the state of the object to be measured is improved.

Although the embodiments according to the present disclosure are described above with reference to drawings, the specific configuration is not limited to the above embodiments, and various modifications are included to the extent that they do not depart from the scope and spirit of the present disclosure.

## Claims

1. A learning data processing device (10), comprising a data processing unit (12) configured to generate learning data used in a learning device (30) that generates a learning model on the basis of time-series data including at least one kind of measured value, wherein
the data processing unit (12) executes at least one of a first removal process in which a statistical value of measured values included in one or multiple predetermined periods of the time-series data and at least one of an outlier determination upper limit value or an outlier determination lower limit value based on the statistical value are calculated, and, of the measured values included in the one of multiple predetermined periods, measured values that are at least one of those greater than or equal to the outlier determination upper limit value or those less than or equal to the outer determination lower limit value are removed from the time-series data, or a second removal process in which, of measured values included in the time-series data, measured values satisfying a predetermined condition are removed from the time-series data.

2. The learning data processing device (10) according to claim 1, wherein the data processing unit (12) executes both the first removal process and the second removal process.

3. The learning data processing device (10) according to claim 1 or 2, wherein, the first removal process includes a process in which, when removal process in the multiple predetermined periods is performed, the statistical value of measured values included in the multiple predetermined periods different from each other of the time-series data and at least one of the outlier determination upper limit value or the outlier determination lower limit value based on the statistical value are calculated, and, of measured values included in each of the multiple predetermined periods, measured values that are at least one of those greater than or equal to the outlier determination upper limit value or those less than or equal to the outlier determination lower limit value are removed from the time-series data.

4. The learning data processing device (10) according to claim 3, wherein
the multiple predetermined periods include a first predetermined period and a second predetermined period, which is a part of the first predetermined period; and
the first removal process includes;
a third removal process in which a first statistical value of measured values included in the first predetermined period and at least one of a first outlier determination upper limit value or a first outlier determination lower limit value based on the first statistical value are calculated, and, of the measured values included in the first predetermined period, measured values that are at least one of those greater than or equal to the first outlier determination upper limit value or those less than or equal to the first outlier determination lower limit value are removed, and
a fourth removal process in which, of measured values after removal obtained by executing the third removal process, a second statistical value of measured values after removal included in the second predetermined period and at least one of a second outlier determination upper limit value or a second outlier determination lower limit value based on the second statistical value are calculated and, of the measured values after removal included in the second predetermined period, measured values that are at least one of those greater than or equal to the second outlier determination upper limit value or those less than or equal to the second outlier determination lower limit value are removed.

5. The learning data processing device (10) according to claim 4, wherein the data processing unit (12) sets a length of the second predetermined period on the basis of autocorrelation of the time-series data.

6. A learning data processing method of generating learning data used in a learning device that generates a learning model on the basis of time-series data including at least one kind of measured value, the method including at least one of:
a first step in which a statistical value of measured values included in one or multiple predetermined periods of the time-series data and at least one of an outlier determination upper limit value or an outlier determination lower limit value based on the statistical value are calculated, and, of measured values included in the predetermined period, measured values that are at least one of those greater than or equal to the outlier determination upper limit value or those less than or equal to the outlier determination lower limit value are removed from the time-series data; or
a second step in which, of measured values included in the time-series data, measured values satisfying a predetermined condition are removed from the time-series data.

7. The learning data processing method according to claim 6, comprising both the first step and the second step.

8. The learning data processing method according to claim 6 or 7, wherein, in the first step, when removal process in the multiple predetermined periods is executed, at least one of the statistical value of measured values included in multiple predetermined periods different from each other of the time-series data and at least one of the outlier determination upper limit value or the outlier determination lower limit value based on the statistical value are calculated, and, of measured values included in each of the multiple predetermined periods, measured values that are at least one of those greater than or equal to the outlier determination upper limit value or those less than or equal to the outlier determination lower limit value are removed from the time-series data.

9. The learning data processing method according to claim 8, wherein
the multiple predetermined periods include a first predetermined period and a second predetermined period, which is a part of the first predetermined period; and
the first step includes:
a third step in which a first statistical value of measured values included in the first predetermined period and at least one of a first outlier determination upper limit value or a first outlier determination lower limit value based on the first statistical value are calculated, and, of the measured values included in the first predetermined period, measured values that are at least one of those greater than or equal to the first outlier determination upper limit value or those less than or equal to the first outlier determination lower limit value are removed; and
a fourth step in which, of measured values after removal obtained by executing the third step, a second statistical value of measured values after removal included in the second predetermined period and at least one of a second outlier determination upper limit value or a second outlier determination lower limit value based on the second statistical value are calculated, and, of the measured values after removal included in the second predetermined period, measured values that are at least one of those greater than or equal to the second outlier determination upper limit value or those less than or equal to the second outlier determination lower limit value are removed.

10. The learning data processing method according to claim 9, further comprising a step of setting a length of the second predetermined period on the basis of autocorrelation of the time-series data.

11. A non-transitory computer-readable medium configured to store a learning data processing program that causes a processor to generate leaning data used in a leaning device that generates a learning model on the basis of time-series data including at least one kind of measured value, wherein
the learning data processing program causes the processor to execute at least one of a first step in which a statistical value of measured values included in one or multiple predetermined periods of the time-series data and at least one of an outlier determination upper limit value or an outlier determination lower limit value based on the statistical value are calculated, and, of measured values included in the one or multiple predetermined periods, measured values that are at least one of those greater than or equal to the outlier determination upper limit value or those less than or equal to the outlier determination lower limit value are removed from the time-series data, or a second step in which, of measured values included in the time-series data, measured values satisfying a predetermined condition are removed from the time-series data.

12. The non-transitory computer-readable medium according to claim 11, wherein the learning data processing program causes the processor to execute both the first step and the second step.

13. The non-transitory computer-readable medium according to claim 11 or 12, wherein, in the first step, the non-transitory computer-readable medium causes the processor to execute, when a removal process in the multiple predetermined periods is executed, a step in which the statistical value of measured values included in multiple predetermined periods different from each other of the time-series data and at least one of an outlier determination upper limit value or an outlier determination lower limit value based on the statistical value are calculated, and, of measured values included in each of the multiple predetermined periods, measured values that are at least one of those greater than or equal to the outlier determination upper limit value or those less than or equal to the outlier determination lower limit value are removed from the time-series data.

14. The non-transitory computer-readable medium according to claim 13, wherein,
the multiple predetermined periods include a first predetermined period and a second predetermined period, which is a part of the first predetermined period; and
in the first step, the non-transitory computer-readable medium causes the processor to execute:
a third step in which a first statistical value of measured values included in the first predetermined period and at least one of a first outlier determination upper limit value or a first outlier determination lower limit value based on the first statistical value are calculated, and, of measured values included in the first predetermined period, measured values that are at least one of those greater than or equal to the first outlier determination upper limit value or those less than or equal to the first outlier determination lower limit value are removed; and
a fourth step in which, of measured values after removal obtained by executing the third step, a second statistical value of measured values after removal included in the second predetermined period and at least one of a second outlier determination upper limit value or a second outlier determination lower limit value based on the second statistical value are calculated, and, of the measured values after removal included in the second predetermined period, measured values that are at least of those greater than or equal to the second outlier determination upper limit value or those less than or equal to the second outlier determination lower limit value are removed.

15. The non-transitory computer-readable medium according to claim 14, wherein the learning data processing program causes the processor to execute a step of setting a length of the second predetermined period on the basis of autocorrelation of the time-series data.
